(19) Europäisches Patentamt
European Patent Office
Office européen des brevets

(11) **EP 2 717 175 A2**

(12) **EUROPEAN PATENT APPLICATION**
published in accordance with Art. 153(4) EPC

(43) Date of publication:
**09.04.2014 Bulletin 2014/15**

(51) Int Cl.:
*G06F 17/30* *(2006.01)*      *G06Q 30/02* *(2012.01)*

(21) Application number: **12792673.1**

(22) Date of filing: **04.06.2012**

(86) International application number:
**PCT/KR2012/004391**

(87) International publication number:
**WO 2012/165924 (06.12.2012 Gazette 2012/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.06.2011  KR 20110053845**
**04.06.2012  KR 20120059699**

(71) Applicant: **Jung, Jin-woo**
**Seoul 135-506 (KR)**

(72) Inventor: **Jung, Jin-woo**
**Seoul 135-506 (KR)**

(74) Representative: **Zacco Denmark A/S**
**Hans Bekkevolds Allé 7**
**2900 Hellerup (DK)**

(54) **VALID KEYWORD SELECTION SYSTEM USING KEYWORD ADVERTISEMENT IN INTERNET SEARCH AND VALID KEYWORD SELECTION METHOD THEREOF**

(57)    The present invention is related to an effective keyword selection system and an effective keyword selection method for selecting an effective keyword for advertisement keywords of an advertiser. The effective keyword selection system according to the present invention includes a visit/call matching part for generating a visit/call table by collecting a plurality of visit information of users visiting at a predetermined period of time before a first call time for each consultation call, an guide result of each consultation call and an keyword click information; a conversion score calculation part for obtaining reference time differences and check reference time differences of the visit/call table and calculating a conversion score by determining the advertisement keyword to be an important keyword satisfying the setting criteria of the advertiser as the check reference time difference is smaller; and an effective keyword selection part for selecting the effective keyword by sorting each item of the consultation result in the order of the conversion score. According to the present invention, an advertiser can only invest an advertisement expense to a keyword having purchasing power by receiving effective keywords corresponding to the distinct criteria of an advertiser according to the rank.

Fig . 7

EP 2 717 175 A2

**Description**

[Technical Field]

The present invention relates to an effective keyword selection system and an effective keyword selection method thereof, and more particularly, an effective keyword selection system and an effective keyword selection method thereof selecting effective keywords corresponding to a criteria set by an advertiser by analyzing history of visits by users connected by an advertisement keyword and by analyzing history of phone calls of visitors.

[Background Art]

The present application claims priority to Korean Patent Application No. 10-2011-0053845 filed on June 3, 2011, and Korean Patent Application No. 10-2012-0059699 filed on June 4, 2012, the entire content of which are incorporated by reference in their entirety.

Search engine marketing is an advertisement action to bring users, who are in the process of searching a specific keyword through a search engine or visiting a webpage, to a Uniform Resource Locator (URL) of an advertiser.

Here, users access the URL of an advertiser linked to an advertisement keyword, and performs an effective advertisement action such as product purchase, membership registration, etc. corresponding to an advertisement purpose of an advertiser. And the advertiser pays an advertisement expense to an advertisement company in return for the connection through the advertisement keyword. An advertiser analyses which users used which advertisement keywords to access a website of the advertiser to perform which effective advertisement actions using a conventional commercial web log analysis program and/or a program developed by the advertiser, to analyze the effectiveness of the advertisement and the reasonableness of the advertisement expense.

The most important aspect of analyzing the effective advertisement action is to figure out, while a variety of users search numerous keywords, which advertisement keyword link was used to access an URL of an advertiser, and whether users accessing the URL actually performed an effective advertisement action

To understand the effective advertisement action, an advertiser, who operates a homepage where users use only the Internet such as that of an intemet shopping mall to access an URL of the advertiser, collect information and conclude with a final effective advertisement action such as purchase and payment, indentifies which keyword is used when users perform an effective advertisement action such as actual sales using conventional commercial web log analyzing technology.

But there are advertisers who use Internet advertisement, in which effective advertisement actions by users cannot take place by using only the Internet.

For example, such as in the case of Internet advertisement in medical consultation, insurance consultation, new business inquiries, interior design inquiry, etc., an advertiser operates a website in a business that offers phone consultation to users visiting through an internet advertisement link, and an effective advertisement action, which is the purpose of the advertisement, occurs when phone consultation is offered to a user.

In this case, an advertisement keyword information, which caused a user who made a phone call to visit an internet during an effective advertisement action with a phone as a medium, cannot be indentified with conventional technologies that analyze Internet visit logs because the process of carrying out the final effective advertisement action involves a phone call after the Internet visit.

Again, the advertiser cannot identify a connection between when a user access the webpage linked to an advertisement keyword and when a final advertisement effect takes place after a telephone call.

Also, even advertisers who operate in a business field where an advertisement effect can be analyzed with conventional technologies such as with an Internet shopping mall, as described above, also operate telephone consultation together.

Here, the advertisement keyword corresponding to an effective advertisement action by a phone consultation cannot be analyzed.

[Detailed Description]

[Technical Problem]

The present invention is provided in view of the above mentioned conventional art. An effective keyword selection system and an effective keyword selection method providing a ranked effective keywords corresponding to criteria set by an advertiser by using matching information, from analyzing and matching visit history of users visiting through an advertisement keyword and history of phone consultation, is provided,

Another aspect of the present invention is to provide a ranked effective keyword corresponding to criteria set by an advertiser by using matching information, from additionally matching phone consultation results and advertisement expense execution information to the matched visit history of users and phone consultation history and using the matching information.

[Technical Solution]

In accordance with an aspect of the present invention to achieve the technical problem, an effective keyword selection system for selecting an effective keyword corresponding to a consultation result with respect to each item an advertiser sets, by matching visit information of a user connected to the Internet by clicking an advertisement link of an advertisement keyword to call information of a caller connected to a phone consultation, the system comprising an effective keyword server, wherein the effective keyword server comprises:

a visit/call matching part for generating a visit/call table by collecting each visit information comprising the advertisement keyword, a search engine and time of visit of users connected to the Internet at a predetermined period of time before a first call time with respect to each consultation call, and the consultation result of each consultation call as each row information;
a conversion score calculation part for obtaining reference time differences and check reference time differences of each row of the visit/call table, using the following equation:

$$\text{Click call time difference} = \text{time difference between user's time of visit through keyword}$$

$$\text{click and time of a first call in each row;}$$

$$\text{Reference time difference} = \text{average of a difference between first call times for actual calls}$$

$$\text{after the time a user visits each advertisement keyword; and}$$

$$\text{Check reference time difference} = \text{time difference between the click call time difference}$$

$$\text{and the reference time difference for each advertisement keyword, and}$$

for calculating a conversion score by determining the advertisement keyword to be in a higher rank satisfying the setting criteria of the advertiser as the check reference time difference is smaller; and
an effective keyword selection part for selecting the effective keyword by sorting each item of the consultation result in the order of the conversion score.

In accordance with an aspect of the present invention, the effective keyword server further comprises at least one of the following parts:

a web log collection part for storing the visit information of a user terminal visiting a URL of an advertiser by clicking the advertisement link;
a call collection part for storing the call information of a callee;
a verification customer analysis part for extracting the user terminal information using an event generated by inducing a user terminal of a caller to connect to a specific web page during a phone consultation guide of the call, matching the visit information of the user terminal corresponding to the extracted user terminal information to the call information, and saving the call information;
a consultation guide collection part for collecting and storing the consultation result with respect to the call of a caller; and
a keyword click analysis part for analyzing and storing keyword click information including the number of clicks, cost of clicks and rate of clicks for each advertisement keyword of the advertiser.

Here, the effective keyword server analyzes the visit information including a search engine, a keyword, an Internet Protocol (IP) address, time of visit, time of stay, a surfing page using an Internet connection log of a user.
Also, the effective keyword server analyzes the visit information including a calling number, an incoming call number, time of first call and time of call from data of an incoming call.

In accordance with an aspect of the present invention, the effective keyword server induces the caller to connect to a web page generating a specific event during the consultation call, searches an IP address of an user terminal corresponding to an IP address of an user terminal of the caller obtained from the generation information of the event through the visit information, and identifies the keyword of the corresponding caller.

Here, when an IP address of a visiting user terminal corresponding to an IP address of a user terminal which generates the event is searched, the effective keyword server calculates the click call time difference of the advertisement keyword inducing visit of the user terminal searched, by said reference time difference which is an average of total users visiting by the advertisement keyword.

Also, the effective keyword server receives guide information including a consulted product, consultation content and a consultation result comprising items of purchase, non purchase and non business, and wherein each item of the consultation result is a setting criteria for an advertiser to select an effective keyword.

Furthermore, the effective keyword server calculates the conversion score by assigning a weighting value to each keyword.

In accordance with an aspect of the present invention to achieve the technical solution, an effective keyword selection method performed by an effective keyword server selecting an effective keyword corresponding to a consultation result with respect to each item an advertiser sets, by matching visit information of a user connected to the Internet by clicking an advertisement link of an advertisement keyword to call information of a caller connected to a phone consultation, the system comprising an effective keyword server, comprising:

(a) a visit/call matching step for generating a visit/call table by collecting each visit information comprising the advertisement keyword, a search engine and user's time of visit connected to the Internet at a predetermined period of time before a first call time with respect to each consultation call, and the consultation result of each consultation call as each row information;

(b) a conversion score calculation step for obtaining reference time differences and check reference time differences of each row of the visit/call table, using the following equation:

$$\text{Click call time difference} = \text{time difference between time a user visits a keyword and time of a first call in each row;}$$

$$\text{Reference time difference} = \text{average of a difference between first call times for actual calls after the time a user visits each advertisement keyword; and}$$

$$\text{Check reference time difference} = \text{time difference between the click call time difference and the reference time difference for each advertisement keyword, and}$$

for calculating a conversion score by determining the advertisement keyword to be in a higher rank satisfying the setting criteria of the advertiser as the check reference time difference is smaller; and

(c) an effective keyword selection step for selecting the effective keyword by sorting each item of the consultation result in the order of the conversion score.

[Advantageous Effects]

According to the present invention, an advertisement keyword, contributing to achieve a goal corresponding to each item an advertiser sets, can be accumulated orderly by goal contribution ranking, number of connections, advertisement expense, efficiency of advertisement expense compared to sales, etc., and thus, more advertisement goals can be achieved with lower advertisement cost by selecting appropriate keywords the advertiser is aiming for and focusing advertisement.

According to one aspect of the present invention, a ranking of advertisement keywords contributing to advertisement actions by users with various items (e.g number of connections of a corresponding keyword, number of connections achieving goal, rate of achieving goal, total advertisement expense, advertisement cost for one goal achievement, etc.,) can be accumulated according to advertisement actions of users an advertiser wants to analyze.

In accordance with another aspect of the present invention, an advertiser can modify a portion of item settings, not to achieve a goal but to achieve both reduction in advertisement expense and improvement in work efficiency by finding an advertisement keyword generating unnecessary tasks or phone consultation, with the described principle and aggressively consider ceasing an advertisement of the corresponding advertisement keyword.

In accordance with yet another aspect of the invention, even with an advertisement with a same keyword, a role of finding a more efficient advertisement phrase may be performed, by indentifying changes in advertisement efficiency for each advertisement keyword according to changes in advertisement phrase for keyword advertisement, in which results of what advertisement goals achieve changes with which advertisement slogan is used.

[Description of Drawings]

The accompanying drawings illustrate a preferred embodiment according to the present invention, and together with the detailed description of the present invention, serve to provide further explanation of the principles of the invention. It should be understood that the present invention is not limited to the following embodiments.

The accompanying drawings illustrate a preferred embodiment according to the present invention, and together with the detailed description of the present invention, serve to provide further explanation of the principles of the invention. It should be understood that the present invention is not limited to the following embodiments.

FIG. 1 is a diagram outlining an effective keyword selection system 1 according to an embodiment of the present invention.
FIG. 2 to 5 are exemplary views of the effective keyword selection screen according to an embodiment of the present invention.
FIG. 6 is an schematic internal diagram outlining the effective keyword server 2 according to an embodiment of the present invention.
FIG. 7 is an schematic internal diagram outlining additional configurations to an effective keyword server 2 in FIG. 6.
FIG. 8 is an exemplary illustration of a configuration of an effective keyword server 2 in FIG. 7.
FIG. 9 is a flow chart of an effective keyword selection method according to an embodiment of the present invention.

[Best Mode]

Exemplary embodiments of the present invention will now be described in detail with reference to the accompanying drawings. It should be understood that the present invention is not limited to the following embodiments and may be embodied in different ways, and that the embodiments are given to provide complete disclosure of the invention and to provide thorough understanding of the invention to those skilled in the art.

Although some exemplary embodiments have been described herein, it should be understood by those skilled in the art that these embodiments are given by way of illustration only, and that various modifications, variations and alterations can be made without departing from the scope of the invention.

<1. System configuration>

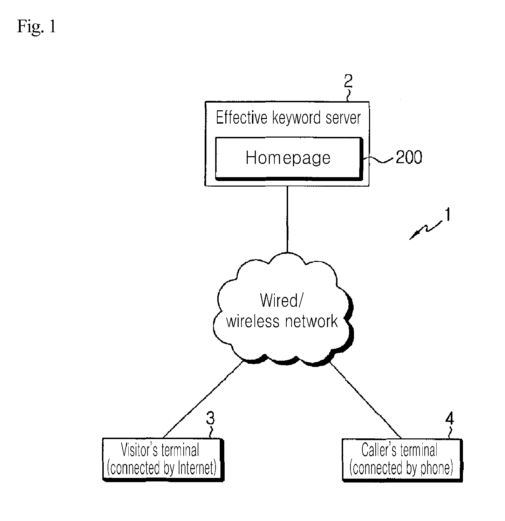

FIG. 1 is a schematic diagram of an effective keyword selection system 1 according to an embodiment of the present invention.

According to an embodiment of the present invention, the keyword selection system 1 includes an effective keyword server 2, which provides a homepage 200 to users connecting through a wired or wireless network and selecting and providing an effective keyword corresponding to criteria set by an advertiser, and a user terminal 3 connecting to a URL of an effective keyword server 2 linked by clicking an advertisement keyword and a caller's terminal 4 receiving a consulting guide when an induced visitor calls to an effective keyword server 2.

The wired or wireless network in the present invention covers an entire communication network capable of data communication using a variety of protocols not only mobile communication network, wired or wireless public network such as the Internet and wired or wireless dedicated network but also wired or wireless telephone network such as Public Switched Telephone Network(PSTN).

The effective keyword server 2, in which an advertiser operates a homepage 200, provides business service to users connecting by clicking an advertisement keyword and to users directly connecting to a homepage 200. Here, the business service is a business domain of an advertiser and there is no special limit on product (e.g. such as goods, labor service, service, etc.) sales, membership registration, supply of contents, etc.

Also, an effective keyword server 2 receives a call connection from Internet visiting users and provides consultation guide by an Advanced Record System (ARS) and/or a guide, and provides a charged or a free service such product sales during the consultation guide process. For the consultation guide, an effective keyword server 2 may be constructed by a private switchboard, which stores an incoming call and call data, or by a device conducting a similar function. Sure enough, providing a charged or a free service to users through phone consultation by an advertiser is a business goal of an advertiser and an advertisement effect is achieved from an advertisement keyword.

The visitor's terminal 3 is a terminal capable of Internet access and receives a search result page including multiple advertisement links corresponding to an advertisement keyword the visitor is searching. When a visitor clicks on a specific advertisement link, a visitor's terminal 3 connects to a URL of an advertiser linked to the advertisement link. The URL of the advertiser may be an address of homepage 200 provided by an effective keyword server 2 or an address of a miscellaneous webpage.

Here, when visitor's terminal 3 connects to a webpage of an advertiser corresponding to a URL of the advertisement link, visitor's terminal 3 receives the webpage and displays it on a screen. And an effective keyword server 2 records a corresponding log data of a visitor as visit information. The visit information includes keyword, search engine (website registered with a keyword), time of visit, connection time, travel path after connection, etc.

The caller's terminal 4 is a terminal is a terminal where visitors connect to a homepage 200 or to the webpage of an advertiser by calling on a phone, including wireless communication terminal, wire phone, Internet phone, etc.. An effective keyword server 2 provides consultation guide through a guide or an ARS to a caller's terminal 4. When a smart terminal is built with Internet connection function and calling function, the smart terminal corresponds to both visitor's terminal 3 and caller's terminal 4.

Here, after a visitor's terminal 3 connects to the Internet through an advertisement keyword in an effective keyword server 2, an effective keyword server 2 records a log data of a corresponding call data and consultation contents as a call information when a caller's terminal 3 connects to an effective keyword server 2. Of course, a visitor and a caller can be the same person or a different person. The call data includes call number, receiving number, call time, end time, total call time, etc. And the consultation contents include goal of a caller, call contents, guide result, etc.

Meanwhile, when the effective keyword server 2 provides a consultation service to a caller's terminal 4 connected over a phone, an effective keyword server 2 may induce a specific event action accompanying an internet connection by a caller during phone consultation, and the IP address of the corresponding Internet connected terminal may be acquired by the event action. Then, the effective keyword server 2 may trace information regarding a visitor's terminal 3, with a same IP address as the acquired IP address, recently visiting an effective keyword server 2.

Desirably, the effective keyword server 2 acquires visiting information by targeting a portion of sample callers from a pool of entire callers, since inducing the event action by targeting all of the callers and acquiring corresponding internet visit information is time and labor consuming. Therefore, an effective keyword server 2 matches each visit information to call information of sample callers and stores in a database(DB).

For example, a telephone guide induces a caller selected as a sample to connect the Internet by informing the caller of a specific URL. Then, a caller connects to the URL using a caller's terminal 3 following the guide of the telephone guide during calling with the telephone guide. Then, an effective keyword server 2 receives the IP address of a visitor's terminal 3 connected to the URL, and the IP address of the corresponding visitor's terminal 3 may be identified by searching the visit information stored in a DB with the received IP address.

Therefore, an effective keyword server 2 can acquire information such as a corresponding caller keyword, search engine, visit time, and etc. from a caller's terminal 3 searched from the DB since the IP address is matching. Visit information of a visitor's terminal searched from the DB is the latest visit information of a visit before the current phone call.

As described, when an effective keyword server 2 traces the matching visit information and the call information, an effective keyword server 2 can calculate a time difference between time of Internet visit through an advertisement keyword by a corresponding caller and time of first call from the matching visit information. And an effective keyword server 2 may calculate a reference time difference corresponding to an average value of the time difference for each advertisement keyword targeting an entire user pool. That is, a reference time difference is a total average value of time taken for every visitor to actually call a phone consultation after connecting to the Internet through an advertisement keyword for each keyword.

Here, when an effective keyword server 2 is assumed to calculate a reference time difference for each keyword targeting sampled callers, an estimated important keyword may be estimated with visit information from a fixed period of time before the first call for each individual consultation call for all of the callers.

For example, when reference time difference, which is calculated targeting sampled callers, is 40 seconds for keyword A, the probability that visit information keywords generated about 40 seconds before the first call is an advertisement keyword for a caller is very high. That is, in the previous example, the probability that visit information is generated 45 seconds before the first call is the advertisement keyword for the caller is higher compared to visit information generated 50 seconds before.

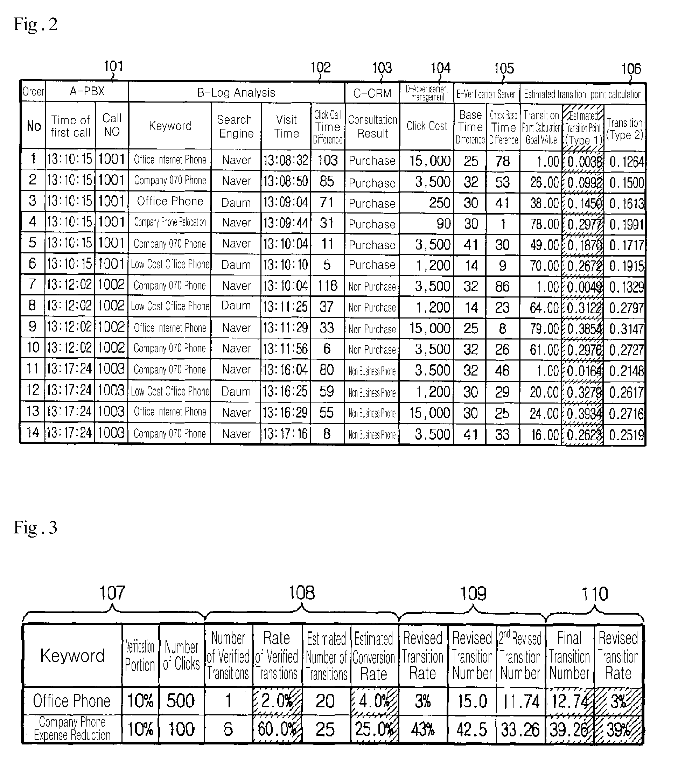

FIG. 2 to 5 is an exemplary illustration of an effective keyword selection screen according an embodiment of the present invention. It should be understood that the illustrated screen is used to assist in understanding the present invention, and the present invention is not limited to the following embodiments.

Referring to FIG.2, the effective keyword server 2 generates a visit/call table, as illustrated, using a call log of a caller and a visit log of a visitor collected in real time.

The visit/call table includes items "A-PBX" 101, "B-Log Analysis" 102, "C-CRM" 103, "D-Advertisement Management" 104, "E-Verification Server" 105 and Conversion Score Calculation" 106. And row data of the items is automatically generated from log data of visit information and call information collected thorough a file input (e.g. excel file) or an Open application Program Interface(API). And the visit/call table is stored in a DB as a data structure matching visit information and call information of a visitor by an effective keyword server 2.

"No." 1 to 6 illustrates six different visit information are matched with regards to one call.

"A-PBX" 101illustrates the values "first call time" and "call No." collected from a consultation call of a user stored in a private switchboard.

"B-log analysis" 102 illustrates 6 visiting information exists during a reference time set for a time before time of first call corresponding to the same call of No. 1 to 6. An effective keyword server 2 matches anonymous and numerous visit information recorded at reference time (e.g. within 2 minutes) before time of first call. Therefore, visit information for each keyword in the illustrated No. 1 to 6 may include or may not include actual visit information of a caller performing a call. Six visit information are matched to call No. "1000" for time of first call "13:10:15" and four visit information are matched to call No "1002."

Here, the reference time may be calculated by calculating an average value of a reference time difference of the entire keyword. And values of items "keyword", "search engine", "visiting time" and "click call time difference" is collected from the six visit information matched to call No "1001." The click call time difference is a value of difference (absolute value) of 'visit time - time of first call.' In case of No. 1, "103" seconds were taken from visit time to time of first call.

"C-CRM" 103 illustrates value of item "consultation result" generated during a consultation guide process of a caller. No. 1 to 6 illustrates a "purchase" by a caller was generated from the call No "1001." "Non purchase" shows consultation was conducted but no purchase was made, "non business call" shows call content for other business which is not purchase consultation content. An item value of "consultation result" may take the form of a variety of categorized values according to criteria of an advertiser.

Here, the item value "consultation result" is a categorized value of a consultation result an advertiser sets to be a reference for identifying the effectiveness of a keyword. For example, an advertiser may inquire about rankings of each keyword which generates purchases, non-purchases or non business calls. Therefore, an advertiser may define an item value of a consultation result and inquire ranked keyword information referenced on criteria with the item values.

For example, when an advertiser adds item values "AM purchase" and "PM purchase", an advertiser may evaluate which keyword leads to "AM purchase" or "PM purchase".

"D-advertisement management" 104 illustrates a "click cost" corresponding to an advertisement cost set for one click for a corresponding keyword. In the case of No 1, cost of one click of "office intemet phone" is 15,000 won.

"E-verification server" 105 illustrates a value calculated for "reference time difference" and "check reference time difference" corresponding to a keyword. The value calculated is calculated with the following formula.

<Formula>

Click call time difference = time difference between time a user visits a keyword and time of a first call in each row;

Reference time difference = average of a difference between first call times for actual calls after the time a user visits each advertisement keyword

Check reference time difference = time difference between the click call time difference and the reference time difference for each advertisement keyword,

For No. 1, click call difference is "103" seconds, reference time difference is "25" seconds and the check click reference time difference between the two is "78" seconds for keyword "office internet phone." In addition, as was described, the reference time difference is calculated from an average of an actual difference between time of visit when users connect through each advertisement keyword during a call targeting sample callers, and time of call. For example, it took 25 seconds after an Internet visit to a phone call for keyword "office internet phone", resulting from calculating a reference time difference of sample callers.

Here, an estimated important keyword corresponding to a call may be estimated when the check reference time difference is compared. For example, for No. 4 keyword "company phone relocation" of the six visit information of call No "1001," error value is "1" second and is a minimum value. The error value of 1 second corresponding to the minimum value shows the probability that a phone call from a corresponding caller is induced by clicking keyword "company phone relocation" is the highest. In case of keyword "office internet phone" for No. 1, error value is the largest at "78" seconds. The maximum error value of 78 seconds shows the probability that a phone call from a corresponding caller is induced by clicking keyword "office internet phone" is the lowest. "Conversion score calculation" 106, which is a score value showing predictability, illustrates items "conversion score calculation goal value", "estimated conversion score (Type 1)","conversion score (Type2)". Here, term "conversion" describes generation of a specific advertisement action (e.g. conversion to purchase, conversion to non purchase, conversion to non business call, etc.) by a consultation result after a consultation call after a visitor of a corresponding advertisement keyword is converted to a caller.

Here, "conversion score calculation goal value" is a modified "check reference time difference" to assign a maximum value to a minimum error value of No. 4 and assign a minimum value to a maximum error value of No. 1. The value is calculated with the following formula.

<Formula>

$$\text{Conversion score calculation goal value} = \text{maximum check reference time difference} - \text{check reference time difference} + 1$$

Conversion score calculation goal value is "1" by calculating '78-78+1' for No.1, and the conversion score calculation goal value is "78" by calculating "78-1+1" for No. 4.

Item "estimated conversion score (type 1)" is a normalized value to be a sum of 1 corresponding to conversion score calculation goal value. The value calculated is calculated with the following formula.

<Formula>

$$\text{Estimated conversion score (type 1)} = \text{conversion score calculation goal value}/\text{sum of check reference time difference of a corresponding call}$$

For example in No. 4, the probability the visitor is induced to visit by clicking a keyword "office internet phone" corresponding to a call is calculated to be a value of "0.2977" from calculation of '78/262', and the probability is about 29%.

Conversion score (type 2) is a normalized value to be a sum of 1 using a distribution of a check reference time difference. The conversion score (type 2) and the estimated conversion score (type 1) are estimated values calculated from different formulas, but is in common that both values are ranking values with value of the check reference time difference applied to each value. For example, in the case of No. 4, a conversion score (type 2) has about 19% probability, and shows the probability that a corresponding caller is visitor of No. 4 is the highest.

The method for calculating "conversion score calculation goal value", "estimated conversion score (type 1)" and "conversion score (type 2)", which forms the "estimated conversion score calculation" 106, is not limited to the formula described above. Naturally, a variety of embodiments are possible when an estimated important keyword may be selected when a check reference time difference within a distribution value of a check reference time difference is smaller. Therefore, it should be clear to those skilled in the art that the present invention is not limited to the score calculation method and may be embodied in different ways.

Further, when an estimated conversion score calculation 106 is calculated, applying weighting values to keywords are possible. For example, applying a large weighting value to a keyword influential to item "purchase" of consultation result makes estimated probability value higher. Therefore, an advertiser may apply weighting values with a variety of criteria to each keyword.

Meanwhile, as described, an effective keyword server 2 generates visit/call table values and stores in a DB.

Also, an effective keyword server 2 may calculate an average conversion score for a same individual keyword. For example, the average conversion score is calculated using an arithmetic mean or a weighted average for the same keyword "business 070" of No. 2 and 5. Also, applying weighting values to individual keywords when calculating the average conversion score is permissible.

Referring to FIG. 3, conversion ratio table compared to a number of total clicks is illustrated.

Row 107 includes items "keyword", "verification proportion", and "number of clicks". Hereinafter, it is described assuming the keyword is "office phone". The effective keyword server 2 shows visitor connection of 500 cases of clicks was received, and 50 cases of clicks, which is 10% of the 500 clicks, is sampled and verified by matching caller information and visitor information.

Row 108 illustrates the verified conversion rate of 2%, calculated from calculating '1/500X100' as one case converted to "purchase" from the 50 verified cases. And, an effective keyword server 2 calculates the "number of estimated conversions" by accumulating and adding estimated conversion scores for each keyword corresponding to each call in FIG. 2 for an analysis period. For example, in the case of keyword "office phone", each point value, such as "0.1450" for "estimated conversion score (type 1)", is accumulated and calculated as 20 points. Therefore, the estimated conversion rate is calculated to be 4% by calculating '20/500=4%' since conversion of the corresponding calculated 20 is generated from the 500 visits during an analysis period.

In row 109, the revised conversion rate is calculated to "3%", which is an arithmetic mean of "verified conversion rate" 2% and "estimated conversion rate" 4%, and then, a number of revised conversions "15" cases is calculated by applying a revised conversion rate to "500" clicks. Hereafter, "11.74" is calculated by revising in accordance with a second revised number of conversions.

From the described formula, an actual conversion of "1" is generated from verifying the sample result of "50" visit cases, which is "10%" of the total "500" visit cases, and as a result, a verified conversion rate "2%" is calculated. Also, an estimated conversion rate value of "4%" is calculated from "20" cases of estimated conversion, by analyzing the number of estimated conversions of the total "500" visiting cases.

Even though the accuracy of the verified conversion rate of "2%" is high, it is a result of analyzing a portion of visiting cases, and the accuracy of the estimated conversion rate of "4%" is low but is a result of estimating from the total visiting cases. But, which one of the two conversion rate is absolutely correct is hard to determine. A verified conversion rate uses a small number of samples but is an index showing an accurate conversion rate, and an estimated conversion rate possess errors but is an index showing a conversion rate from the result of analyzing the remaining total visitors, therefore the two conversion rates are complementary. As described above, the final conversion rate is chosen as the average value of the two conversion rates from the formula '(verified conversion rate + estimated conversion rate)/2 = final conversion rate'. But the formula is not limited to the described formula, and it is apparent to those skilled in the art that various modifications and equivalent embodiments can be made to derive a value between the verified conversion rate and the estimated conversion rate.

In row 110, "12.74" is calculated from calculating '1+11.74', which is a summation of the "verified conversion number" and "second revised conversion number" and verified as a "final number of conversions", and a final conversion rate is calculated as about "3%".

Meanwhile, an effective keyword server 2 generates values of the conversion rate table and stores in a DB as describe above. Here, a variety of design changes may be applied to derive estimated calculation in row 108, revised calculation in row 109 and final conversion calculation in row 110.

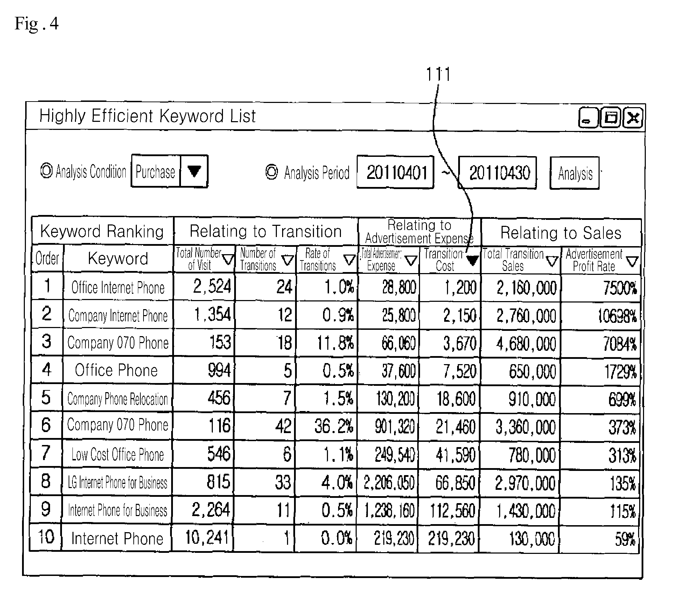

Referring to FIG. 4, a list is illustrated showing items "number of total visits", "number of conversions", "conversion rate", "total advertisement expense", "conversion cost", "total conversion sales", "advertisement profit rate", etc. assuming a conversion to "purchase" is performed through a phone consultation after a visit connection by each keyword during a specific analysis period.

The effective keyword server 2 provides the keyword list to an advertiser by selecting an optimal keyword list corresponding to an advertisement goal. When an advertiser sets a desired period and a consultation result 103 as an analysis condition (e.g., purchase), an effective keyword server 2 provides the best effective keywords by sorting as a ranking according to the condition. For the convenience of description, it is assumed that an advertiser selects criteria for arranging "conversion cost" 111on a screen illustrating the keyword list and inquires the order of a conversion cost from the lowest value. Following is the definition of each terminology.

Total number of visits = Total number of incoming visits through a corresponding keyword during a corresponding period (irrelevant to the analysis criteria)

Number of conversions = Sum of conversion scores according to analysis criteria during a corresponding period.

Conversion rate = number of conversions/total number of visits

Total advertisement expense = Total advertisement expense spent on a corresponding keyword during a corresponding period (irrelevant to the analysis criteria)

Conversion cost = total advertisement expense/number of conversions

Total conversions sales = sum of the total sales as result of conversion through a corresponding keyword during a corresponding period

Advertisement profit rate = total conversion sales/total advertisement expense

According to the described terminology description, the "conversion cost" 111 is 1,200 won for No. 1 keyword "office internet phone", and is the lowest ranked keyword among the conversion cost 111 in the keyword list. Therefore, since the cost for generating one case of "purchase" conversion is the lowest, "office internet phone" is the most efficient keyword. Also, the No.2 keyword "company internet phone" is a keyword with the highest profit rate corresponding to 10,698% based on "advertisement, profit rate". It shows that keyword "company internet phone" has the highest "total conversion sales" compared to "total advertisement expense" spent. Also, No. 3 keyword "company 070 phone" recorded the highest sales based on "total conversion sales". This may be different in aspect of efficiency, but is a keyword recording the highest sales based on absolute sales figures. Also, No. 6 keyword "company 070 subscription" recorded the highest number based on "number of conversions". This may differ in aspects of efficiency and sales, but means that this keyword is the highest ranked regarding number of conversions. On the other hand, 10th keyword "internet phone" is a keyword having lower sales than advertisement expense by recording '59%' in terms of "advertisement profit rate."

An advertiser may set different criteria for a good keyword as necessary. When profit rate is to be emphasized, a keyword may be selected based on "advertisement profit rate", and when sales volume is to be emphasized more than profit rate, a keyword may be selected based on "total conversion sales". Similarly, efficiency may be improved by cancelling advertisement after selecting keywords with low effectiveness and sales such as "internet phone".

Since an advertiser can estimate how much performance may be achieved with how much advertisement budget invested in which advertisement keyword from the keyword list, this may be used as a main reference for company management.

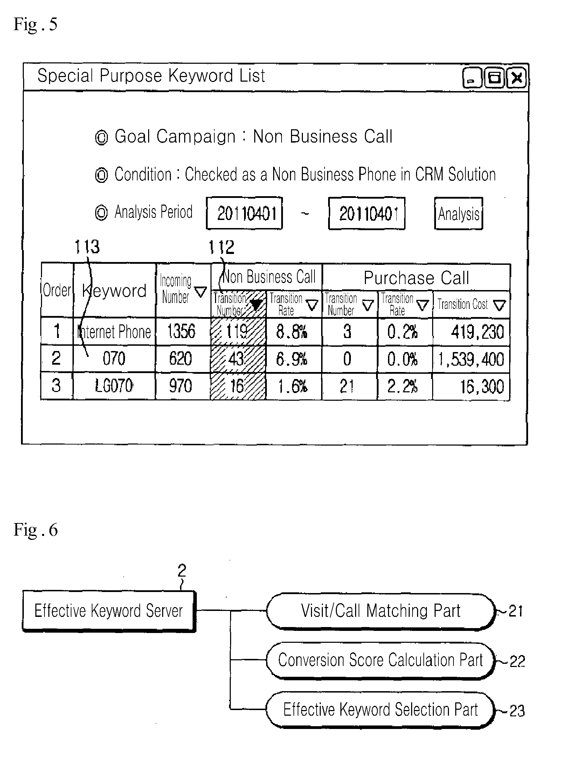

Referring to FIG. 5, a keyword list for special purpose (non business phone) comparing "number of conversions" 112 and "conversion rate" to "purchase" conversion is illustrated assuming a conversion to "non business phone" through a phone consultation after connecting to the Internet by clicking an advertisement keyword. The keyword list is where a keyword list appropriate for a specifically designated situation or goal is found. The special purpose can be set by designating "non business phone" among the items of consultation result 103.

For example, in the case of No. 1 keyword, non business phone consultation is generated not having purchases corresponding to the "119" cases of number of conversions 112 among the "1356" of visits for keyword "internet phone". The keyword "internet phone" having the maximum value of conversion rate for non business phones may be interpreted as having the highest probability of causing misunderstanding and confusion to users. Furthermore, the conversion rate for the probability of purchase is "0.2%" for the keyword "internet phone", therefore the conversion rate is low compared to conversion cost of purchase. Therefore an advertiser may gain opportunity to consider cancelling an advertisement for keyword "internet phone" by checking a special purpose keyword list. Here, No. 2 keyword "070" 113 is a representative ineffective keyword, which increases cost burden on an advertiser, having a high conversion rate of non business call and at the same time having a number of conversions of 0 compared to purchase conversions and having a high conversion cost.

In another example, an online advertisement was carried out for sales of life insurance, and 'keyword generating consultation other than for business purposes', such as receiving inquiries for cancellation of car insurance with a corresponding keyword, may be discovered.

Therefore, an advertiser may find a 'keyword satisfying a specific condition' by adding a 'specific condition', the advertiser desires to know corresponding to the total consultation inquiry phone calls, as a consultation result 103 item.

Here, a keyword satisfying the specific condition is, for example, may base on customer characteristics such as sex, time of first consultation, etc., or a keyword, which generates a specific condition based on results or performance such as sales generated by customers or repurchases may be discovered.

FIG. 6 is an schematic internal diagram outlining an effective keyword server 2 according to an embodiment of the present invention.

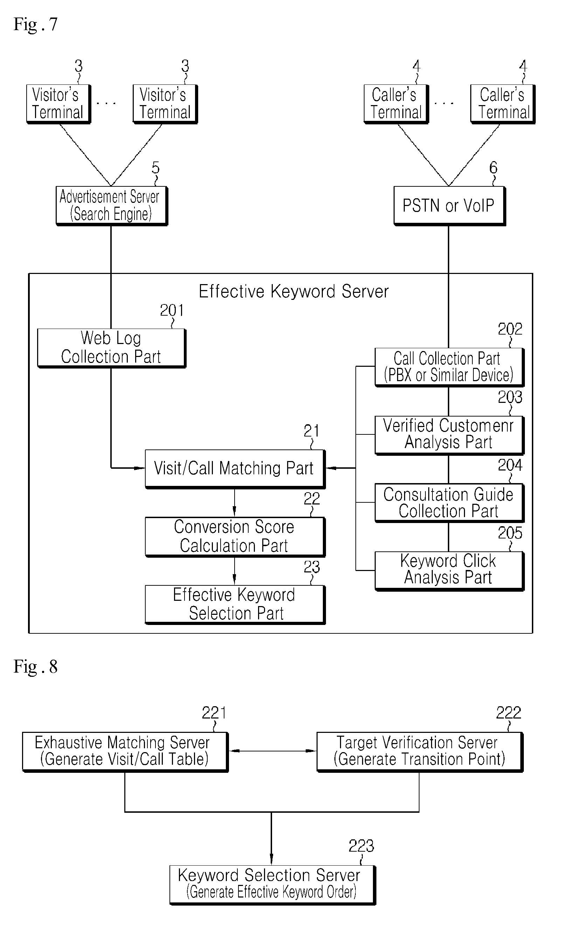

The effective keyword server 2 according to an embodiment of the present invention includes, a visit/call matching part 21 collecting a log of an estimated visit information and other information within a period of time for each phone call information as a table, a conversion score calculation part 22 calculating a conversion score for a corresponding keyword according to a matching phone call information and visit information, and an effective keyword selection part 23 selecting a ranking of effective keywords based on a calculated conversion score. The modules from 21 to 23 are described in detail referring to FIG. 7.

FIG. 7 is an schematic internal diagram with additional configuration to an effective keyword server 2 in FIG. 6.

The keyword server 2 additionally includes, a web log collection part 201 analyzing a visit information of a visitor's terminal 3 connecting through a advertisement keyword, a call collection part 202 analyzing a consultation call information of a visitor, a verified customer analysis part 203 tracing a visit information by inducing an event action intended for a portion of sample callers among all of the callers consulting through a phone, a consultation guide collection part 204 collecting results and contents of guide of a consultation call, a keyword analysis part 205 analyzing a click information generated from clicks of individual keyword.

The web log collection part 201 analyzes visit information of a visitor's terminal 3 visiting through an URL of an effective keyword server 2 by clicking a keyword in an advertisement server 5, in which a keyword is registered, and stores the information in a DB.

Here, a web log collection part 201 analyzes visit information including search engine, keyword, IP address, time of visit, time of stay and surfing page by using a visit log of users recorded when a visitor's terminal 3 is accessed.

When a call signal is received coming through a PSTN or a VoIP 6, the call collection part 202 analyzes call information of a user from recorded call data and stores in a DB as call information. In the case when an internet call is received through a VoIP network, a call collection part extracts an IP address, in which the caller calls with an internet phone. Naturally, the call collection part 202 may trace internet visit information of a caller when an IP address of as caller is extracted.

Here, a call collection part 202 analyzes consultation call information including calling number, incoming number, time of first call and duration of call from data from an incoming call.

The verified customer analysis part 203 induces all callers or a portion of callers extracted from a sample during phone consultation call to connect to a specific webpage of an effective keyword server 2 with an internet terminal, and then, traces visit information of visitor's terminal 3 corresponding to a corresponding user terminal using the generated internet connection event.

Here, a verified customer analysis part 203 asks for an effective event action from a portion of the sample customers among all callers by a guide or by a call guide from an ARS. How to ask for an event action includes a variety of ways and no special limit exists. For example, a verified customer analysis part 203 may induce to push a specific button on homepage 2000 or ask the caller to enter a temporary issued serial number.

Further, a verified customer analysis part 203 extracts an IP address of the internet terminal from an event information performed by a caller and then searches the extracted IP address of a corresponding visitor's terminal 3 by tracing a visit information during a previous period of time with the corresponding extracted IP address. When a verified customer analysis part 203 searches the IP address, a caller keyword corresponding to the searched visit information may be extracted.

Also, when the verified customer analysis part 203 acquires a corresponding visit keyword by a generated event of a caller, a reference time difference corresponding to a caller is calculated by an average of all the users of a corresponding visit keyword.

The consultation guide collection part 204 collects and stores information of a phone call content of a caller and result of a consultation guide.

Here, the consultation guide collection part 204 receives and stores guide information including consulted product, consultation content, consultation result (purchase, non purchase, non business and etc.) and sales value. And each item of the consultation result is used as setting criteria for an advertiser to select an effective keyword.

The keyword click analysis part 205 analyzes and stores keyword click information including number of clicks, cost of click and click rate for each advertisement keyword of an advertiser.

Meanwhile, the visit/call matching part 21 collects and stores multiple visit information (e.g. keyword, search engine, visit time) of users visiting at a period of time before the time of first call, guide result and keyword click information of each consultation call in a visit/call table illustrated in FIG. 2 based on the time of first call for each consultation call.

And the conversion score calculation part 22 calculates a check reference time difference using the formula for each row of the visit/call table. A keyword is more effective when check reference time difference is smaller, as described referring to FIG. 2.

Here, the conversion score calculation part 22 may grant scores for error distribution of a time difference in a variety of ways. And the conversion score may also be calculated by granting weighting values to each advertisement keyword. The criteria to apply the weighting values may be applied by priority to the highly efficient keyword with effective purchasing power or keyword with low advertisement expense and etc.

Also, a conversion score calculation part 22 identifies the minimum value of check reference time difference as a most important keyword, and calculates conversion scores by applying a normal distribution or probability distribution using a band distribution of a check reference time difference.

The effective keyword selection part 23 selects an effective keyword in a sequence by aligning in an order of conversion scores of each items of consultation results when all the values of a visit/call matching table is generated.

FIG. 8 is an exemplary diagram of an effective keyword server 2 of FIG.7.

The effective keyword server 2 may include an exhaustive matching server 221, a target verification server 222 and keyword selection server 223.

The exhaustive matching server 221 collects values corresponding to a visit/call matching table by collecting a log of visit information of visitor's terminal 3, a call information of caller's terminal 4, a result of customer consultation, etc.

When a call/matching table is filled by an exhaustive matching server, the target verification server 222 calculates a check reference time difference by applying a reference time difference, and generates a conversion score using a distribution value of a check reference time difference.

A keyword selection server 223 then generates a ranked list by selecting an effective keyword illustrated in FIG. 4 and 5 using conversion scores.

<2. Method Configuration >

The effective keyword selection method using a keyword advertisement of internet search in accordance with an embodiment of the present invention may be realized preferably by constructing the described keyword selection system 1.

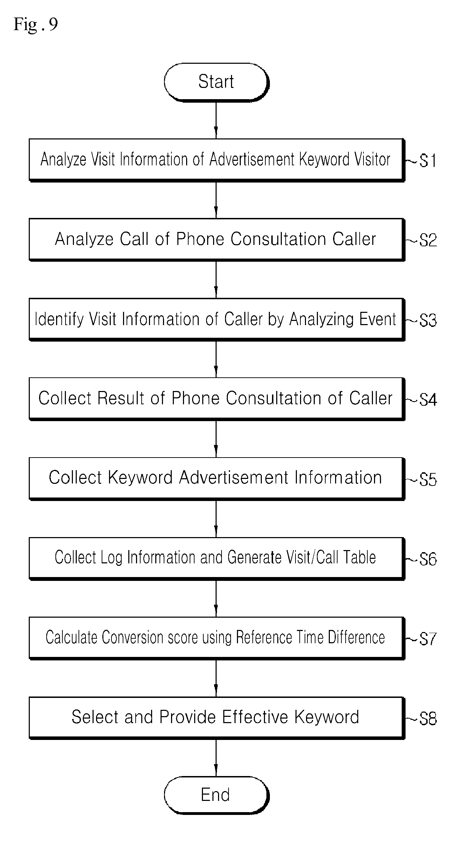

FIG. 9 is a flowchart outlining an effective keyword selection method according to an embodiment of the present invention.

A user uses visitor's terminal 3 to search keywords and search various webpages during internet surfing, and ultimately clicks an advertisement link of an advertiser during this process. When a user clicks a corresponding keyword, an effective keyword server 2 receives a connection from a corresponding visitor's terminal 2 and provides a corresponding webpage. Here, an effective keyword server 2 records corresponding visit information of a visitor as log information.

When a log is generated by visit information, a web log collection part 201 of an effective keyword server 2 analyzes and stores data required for selecting an effective keyword (step S1).

Here, visit information of a user may be analyzed in real time according to when visit information is generated, and may be analyzed after visit information is collected according to an effective keyword selection request by an advertiser.

And a call collection part 202 analyzes and stores consultation call information of a caller (step S2). Here, a call collection part 202 may analyze call information using a private switchboard or a similar device capable of recording incoming call information, and collect "time of first call" data from the analysis.

When a call is received, a verified customer analysis part 203 induces a portion of the sampled customers to perform a predetermined event action at a specific webpage using the user terminal of the caller during a phone call consultation guide, and traces a visit information of a visitor's terminal 3 corresponding to an IP address of the a terminal of a caller using the induced and generated event (step S3). Naturally, the event action may be induced to all of the callers rather than to a sampled caller.

In a process of tracing the visit information, a verified customer analysis part 203 compares both IP addresses, and obtains a keyword from corresponding visit information when a matching visitor's terminal is searched. Which keyword was used by a corresponding visitor to visit and cause a phone call consultation may be known. Also, a verification customer analysis part 203 may calculate a "reference time difference" of a corresponding keyword regarding sampled customers.

A consultation guide collection part 204 collects and stores consultation results of the consultation call of a caller from a consultation log (step S4). Here, individual items of the consultation result become criteria for ranking effective keywords. Therefore, an advertiser may investigate the keyword list ranked by each item,

A keyword click analysis part 205 analyzes and stores keyword click information including a number of clicks, click cost, click rate for each of the individual keyword of an advertiser (step S5).

The visit/call matching part 21 generates a visit/call table in real time or with a request from an advertiser concurrently with the described data analysis and collection process (step S6).

Here, a visit/call matching part 21 collects visitor keyword, search engine and visit time data based on time of first call for each individual consultation call. And guide result and keyword click information is collected. The collected information is stored in a visit/call table (refer to FIG. 2).

When values are stored in a visit/call table, a conversion score calculation part 22 calculates a conversion score corresponding to a distribution value of a check reference time difference (step S7). Conversion scores are higher as check reference time difference become smaller, and a corresponding keyword is estimated as a highly efficient keyword inducing an actual advertisement action (e.g. purchase).

When the conversion score is generated, an effective keyword selection part 23 selects effective keywords in a hierarchal order by arranging in an order of conversion scores for each individual consultation result and provides to an advertiser terminal (step S8).

The term "part" used in the described embodiments is not a terminology used to describe a hardware classification for an effective keyword selection system 1. Therefore, multiple parts can be combined to be one part and one part can be divided to be multiple parts. Also, module may mean a hardware module and also a software module. Therefore, it should be understood that the present invention is not limited to the term "part".

Although some embodiments have been provided to illustrate the present invention, it will be apparent to those skilled in the art that the embodiments are given by way of illustration, and that various modifications and equivalent embodiments can be made without departing from the scope of the present invention.

**Claims**

1. An effective keyword selection system for selecting an effective keyword corresponding to a consultation result with respect to each item an advertiser sets, by matching visit information of a user connected to the Internet by clicking an advertisement link of an advertisement keyword to call information of a caller connected to a phone consultation, the system comprising an effective keyword server,
   wherein the effective keyword server comprises:

   a visit/call matching part for generating a visit/call table by collecting each visit information comprising the advertisement keyword, a search engine and time of visit of users connected to the Internet at a predetermined period of time before a first call time with respect to each consultation call, and the consultation result of each consultation call as each row information;
   a conversion score calculation part for obtaining reference time differences and check reference time differences of each row of the visit/call table, using the following equation:

   $$\text{Click call time difference} = \text{time difference between user's time of visit through keyword click and time of a first call in each row;}$$

   $$\text{Reference time difference} = \text{average of a difference between first call times for actual calls after the time a user visits each advertisement keyword; and}$$

   $$\text{Check reference time difference} = \text{time difference between the click call time difference and the reference time difference for each advertisement keyword, and}$$

   for calculating a conversion score by determining the advertisement keyword to be in a higher rank satisfying the setting criteria of the advertiser as the check reference time difference is smaller; and
   an effective keyword selection part for selecting the effective keyword by sorting each item of the consultation result in the order of the conversion score.

2. The system according to claim 1, wherein the effective keyword server further comprises at least one of the following parts:

a web log collection part for storing the visit information of a user terminal visiting a URL of an advertiser by clicking the advertisement link;
a call collection part for storing the call information of a callee;
a verification customer analysis part for extracting the user terminal information using an event generated by inducing a user terminal of a caller to connect to a specific web page during a phone consultation guide of the call, matching the visit information of the user terminal corresponding to the extracted user terminal information to the call information, and saving the call information;
a consultation guide collection part for collecting and storing the consultation result with respect to the call of a caller; and
a keyword click analysis part for analyzing and storing keyword click information including the number of clicks, cost of clicks and rate of clicks for each advertisement keyword of the advertiser.

3. The system according to claim 1 or 2, wherein the effective keyword server analyzes the visit information including a search engine, a keyword, an Internet Protocol (IP) address, time of visit, time of stay, a surfing page using an Internet connection log of a user.

4. The system according to claim 1 or 2, wherein the effective keyword server analyzes the visit information including a calling number, an incoming call number, time of first call and time of call from data of an incoming call;

5. The system according to claim 1 or 2, wherein the effective keyword server induces the caller to connect to a web page generating a specific event during the consultation call, searches an IP address of an user terminal corresponding to an IP address of an user terminal of the caller obtained from the generation information of the event through the visit information, and identifies the keyword of the corresponding caller.

6. The system according to claim 5, wherein, when an IP address of a visiting user terminal corresponding to an IP address of a user terminal which generates the event is searched, the effective keyword server calculates the click call time difference of the advertisement keyword inducing visit of the user terminal searched, by said reference time difference which is an average of total users visiting by the advertisement keyword.

7. The system according to claim 1 or 2, wherein the effective keyword server receives guide information including a consulted product, consultation content and a consultation result comprising items of purchase, non purchase and non business, and
wherein each item of the consultation result is a setting criteria for an advertiser to select an effective keyword.

8. The system according to claim 1 or 2, wherein the effective keyword server calculates the conversion score by assigning a weighting value to each keyword.

9. An effective keyword selection method performed by an effective keyword server selecting an effective keyword corresponding to a consultation result with respect to each item an advertiser sets, by matching visit information of a user connected to the Internet by clicking an advertisement link of an advertisement keyword to call information of a caller connected to a phone consultation, the system comprising an effective keyword server, comprising:

(a) a visit/call matching step for generating a visit/call table by collecting each visit information comprising the advertisement keyword, a search engine and time of visit of users connected to the Internet at a predetermined period of time before a first call time with respect to each consultation call, and the consultation result of each consultation call as each row information;
(b) a conversion score calculation step for obtaining reference time differences and check reference time differences of each row of the visit/call table, using the following equation:

$$\text{Click call time difference} = \text{time difference between time a user visits a keyword and time}$$

of a first call in each row;

Reference time difference = average of a difference between first call times for actual calls after the time a user visits each advertisement keyword; and

Check reference time difference = time difference between the click call time difference

and the reference time difference for each advertisement keyword, and

for calculating a conversion score by determining the advertisement keyword to be in a higher rank satisfying the setting criteria of the advertiser as the check reference time difference is smaller; and
(c) an effective keyword selection step for selecting the effective keyword by sorting each item of the consultation result in the order of the conversion score.

10. The method according to claim 9, wherein the step (a) further comprises at least one of the following steps:

(a1) a step of storing the visit information of a user terminal visiting a URL of an advertiser by clicking the advertisement link;
(a2) a step of storing the call information of a callee;
(a3) a step of extracting the user terminal information using an event generated by inducing a user terminal of a caller to connect to a specific web page during a phone consultation guide of the call, matching the visit information of the user terminal corresponding to the extracted user terminal information to the call information, and saving the call information;
(a4) a step of collecting and storing the consultation result with respect to the call of a caller;
(a5) a step of analyzing and storing keyword click information including the number of clicks, cost of clicks and rate of clicks for each advertisement keyword of the advertiser.

11. The method according to claim 9 or 10, wherein the step (a) is a step of analyzing the visit information including a search engine, a keyword, an Internet Protocol (IP) address, time of visit, time of stay, a surfing page using an Internet connection log of a user.

12. The method according to claim 9 or 10, wherein the step (a) is a step of analyzing the visit information including a calling number, an incoming call number, time of first call and time of call from data of an incoming call.

13. The method according to claim 9 or 10, wherein the step (a) is a step of inducing the caller to connect to a web page generating a specific event during the consultation call, searching an IP address of an user terminal corresponding to an IP address of an user terminal of the caller obtained from the generation information of the event through the visit information, and identifying the keyword of the corresponding caller.

14. The method according to claim 9 or 10, wherein the step (a) further comprises a step of receiving guide information including a consulted product, consultation content and a consultation result comprising items of purchase, non purchase and non business, and
wherein each item of the consultation result is a setting criteria for an advertiser to select an effective keyword.

15. The method according to claim 9 or 10, wherein the step (b) is a step of, when an IP address of a visiting user terminal corresponding to an IP address of a user terminal which generates the event is searched, calculating the click call time difference of the advertisement keyword inducing visit of the user terminal searched, by said reference time difference which is an average of total users visiting by the advertisement keyword.

16. The method according to claim 9 or 10, wherein the step (b) is a step of calculating the conversion score by assigning a weighting value to each keyword.

Fig. 1

# Fig . 2

| Order No | A-PBX | | B-Log Analysis | | | | C-CRM | D-Advertisement management | E-Verification Server | | Estimated transition point calculation | | |
| | Time of first call | Call NO | Keyword | Search Engine | Visit Time | Click Call Time Difference | Consultation Result | Click Cost | Base Time Difference | Check Base Time Difference | Transition Point Calculation Goal Value | Estimated Transition Point (Type 1) | Transition (Type 2) |
|---|---|---|---|---|---|---|---|---|---|---|---|---|---|
| 1 | 13:10:15 | 1001 | Office Internet Phone | Naver | 13:08:32 | 103 | Purchase | 15,000 | 25 | 78 | 1.00 | 0.0038 | 0.1264 |
| 2 | 13:10:15 | 1001 | Company 070 Phone | Naver | 13:08:50 | 85 | Purchase | 3,500 | 32 | 53 | 26.00 | 0.0992 | 0.1500 |
| 3 | 13:10:15 | 1001 | Office Phone | Daum | 13:09:04 | 71 | Purchase | 250 | 30 | 41 | 38.00 | 0.1450 | 0.1613 |
| 4 | 13:10:15 | 1001 | Company Phone Relocation | Naver | 13:09:44 | 31 | Purchase | 90 | 30 | 1 | 78.00 | 0.2977 | 0.1991 |
| 5 | 13:10:15 | 1001 | Company 070 Phone | Naver | 13:10:04 | 11 | Purchase | 3,500 | 41 | 30 | 49.00 | 0.1876 | 0.1717 |
| 6 | 13:10:15 | 1001 | Low Cost Office Phone | Daum | 13:10:10 | 5 | Purchase | 1,200 | 14 | 9 | 70.00 | 0.2672 | 0.1915 |
| 7 | 13:12:02 | 1002 | Company 070 Phone | Naver | 13:10:04 | 118 | Non Purchase | 3,500 | 32 | 86 | 1.00 | 0.0049 | 0.1329 |
| 8 | 13:12:02 | 1002 | Low Cost Office Phone | Daum | 13:11:25 | 37 | Non Purchase | 1,200 | 14 | 23 | 64.00 | 0.3122 | 0.2797 |
| 9 | 13:12:02 | 1002 | Office Internet Phone | Naver | 13:11:29 | 33 | Non Purchase | 15,000 | 25 | 8 | 79.00 | 0.3854 | 0.3147 |
| 10 | 13:12:02 | 1002 | Company 070 Phone | Naver | 13:11:56 | 6 | Non Purchase | 3,500 | 32 | 26 | 61.00 | 0.2976 | 0.2727 |
| 11 | 13:17:24 | 1003 | Company 070 Phone | Naver | 13:16:04 | 80 | Non Business Phone | 3,500 | 32 | 48 | 1.00 | 0.0164 | 0.2148 |
| 12 | 13:17:24 | 1003 | Low Cost Office Phone | Daum | 13:16:25 | 59 | Non Business Phone | 1,200 | 30 | 29 | 20.00 | 0.3279 | 0.2617 |
| 13 | 13:17:24 | 1003 | Office Internet Phone | Naver | 13:16:29 | 55 | Non Business Phone | 15,000 | 30 | 25 | 24.00 | 0.3934 | 0.2716 |
| 14 | 13:17:24 | 1003 | Company 070 Phone | Naver | 13:17:16 | 8 | Non Business Phone | 3,500 | 41 | 33 | 16.00 | 0.2623 | 0.2519 |

# Fig . 3

| Keyword | Verification Portion | Number of Clicks | Number of Verified Transitions | Rate of Verified Transitions | Estimated Number of Transitions | Estimated Conversion Rate | Revised Transition Rate | Revised Transition Number | 2nd Revised Transition Number | Final Transition Number | Revised Transition Rate |
|---|---|---|---|---|---|---|---|---|---|---|---|
| Office Phone | 10% | 500 | 1 | 2.0% | 20 | 4.0% | 3% | 15.0 | 11.74 | 12.74 | 3% |
| Company Phone Expense Reduction | 10% | 100 | 6 | 60.0% | 25 | 25.0% | 43% | 42.5 | 33.26 | 39.26 | 39% |

Fig . 4

111

## Highly Efficient Keyword List

◎ Analysis Condition [ Purchase ▼ ]　　◎ Analysis Period [ 20110401 ] ~ [ 20110430 ]　[ Analysis ]

| Keyword Ranking | | Relating to Transition | | | Relating to Advertisement Expense | | Relating to Sales | |
|---|---|---|---|---|---|---|---|---|
| Order | Keyword | Total Number of Visit ▽ | Number of Transitions ▽ | Rate of Transitions ▽ | Total Advertisement Expense ▽ | Transition Cost ▼ | Total Transition Sales ▽ | Advertisement Profit Rate ▽ |
| 1 | Office Internet Phone | 2,524 | 24 | 1.0% | 28,800 | 1,200 | 2,160,000 | 7500% |
| 2 | Company Internet Phone | 1,354 | 12 | 0.9% | 25,800 | 2,150 | 2,760,000 | 10698% |
| 3 | Company 070 Phone | 153 | 18 | 11.8% | 66,060 | 3,670 | 4,680,000 | 7084% |
| 4 | Office Phone | 994 | 5 | 0.5% | 37,600 | 7,520 | 650,000 | 1729% |
| 5 | Company Phone Relocation | 456 | 7 | 1.5% | 130,200 | 18,600 | 910,000 | 699% |
| 6 | Company 070 Phone | 116 | 42 | 36.2% | 901,320 | 21,460 | 3,360,000 | 373% |
| 7 | Low Cost Office Phone | 546 | 6 | 1.1% | 249,540 | 41,590 | 780,000 | 313% |
| 8 | LG Internet Phone for Business | 815 | 33 | 4.0% | 2,206,050 | 66,850 | 2,970,000 | 135% |
| 9 | Internet Phone for Business | 2,264 | 11 | 0.5% | 1,238,160 | 112,560 | 1,430,000 | 115% |
| 10 | Internet Phone | 10,241 | 1 | 0.0% | 219,230 | 219,230 | 130,000 | 59% |

Fig . 5

Special Purpose Keyword List

◎ Goal Campaign : Non Business Call

◎ Condition : Checked as a Non Business Phone in CRM Solution

◎ Analysis Period | 20110401 | ~ | 20110401 | |Analysis|

113 112

| Order | Keyword | Incoming Number ▽ | Non Business Call | | Purchase Call | | |
|---|---|---|---|---|---|---|---|
| | | | Transition Number ▼ | Transition Rate ▽ | Transition Number ▽ | Transition Rate ▽ | Transition Cost ▽ |
| 1 | Internet Phone | 1356 | 119 | 8.8% | 3 | 0.2% | 419,230 |
| 2 | 070 | 620 | 43 | 6.9% | 0 | 0.0% | 1,539,400 |
| 3 | LG070 | 970 | 16 | 1.6% | 21 | 2.2% | 16,300 |

Fig . 6

2

| Effective Keyword Server |

Visit/Call Matching Part ~21

Conversion Score Calculation Part ~22

Effective Keyword Selection Part ~23

Fig. 7

Visitor's Terminal  3  ...  Visitor's Terminal  3

Caller's Terminal  4  ...  Caller's Terminal  4

Advertisement Server (Search Engine)  5

PSTN or VoIP  6

**Effective Keyword Server**

Web Log Collection Part  201

Call Collection Part (PBX or Similar Device)  202

Verified Customenr Analysis Part  203

Visit/Call Matching Part  21

Consultation Guide Collection Part  204

Conversion Score Calculation Part  22

Keyword Click Analysis Part  205

Effective Keyword Selection Part  23

Fig. 8

Exhaustive Matching Server (Generate Visit/Call Table)  221

Target Verification Server (Generate Transition Point)  222

Keyword Selection Server (Generate Effective Keyword Order)  223

Fig. 9

```
                    ┌──────────┐
                    │  Start   │
                    └──────────┘
                         │
                         ▼
      ┌─────────────────────────────────────────────────┐
      │ Analyze Visit Information of Advertisement Keyword Visitor │──S1
      └─────────────────────────────────────────────────┘
                         │
                         ▼
      ┌─────────────────────────────────────────────────┐
      │      Analyze Call of Phone Consultation Caller      │──S2
      └─────────────────────────────────────────────────┘
                         │
                         ▼
      ┌─────────────────────────────────────────────────┐
      │ Identify Visit Information of Caller by Analyzing Event │──S3
      └─────────────────────────────────────────────────┘
                         │
                         ▼
      ┌─────────────────────────────────────────────────┐
      │    Collect Result of Phone Consultation of Caller   │──S4
      └─────────────────────────────────────────────────┘
                         │
                         ▼
      ┌─────────────────────────────────────────────────┐
      │      Collect Keyword Advertisement Information      │──S5
      └─────────────────────────────────────────────────┘
                         │
                         ▼
      ┌─────────────────────────────────────────────────┐
      │  Collect Log Information and Generate Visit/Call Table │──S6
      └─────────────────────────────────────────────────┘
                         │
                         ▼
      ┌─────────────────────────────────────────────────┐
      │ Calculate Conversion score using Reference Time Difference │──S7
      └─────────────────────────────────────────────────┘
                         │
                         ▼
      ┌─────────────────────────────────────────────────┐
      │       Select and Provide Effective Keyword         │──S8
      └─────────────────────────────────────────────────┘
                         │
                         ▼
                    ┌──────────┐
                    │   End    │
                    └──────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110053845

- KR 1020120059699